# EUROPÄISCHE PATENTSCHRIFT

(11) **EP 3 364 119 B1**
(45) Veröffentlichungstag und Bekanntmachung des Hinweises auf die Patenterteilung: **04.11.2020**
(21) Anmeldenummer: 18154585.6
(22) Anmeldetag: 01.02.2018
(51) Int. Cl.: F24F 13/02, F24F 13/08, F16L 25/14, F24C 15/20, F16L 43/00

(54) **UMLENKSTÜCK**
DEVIATING ELEMENT
ÉLÉMENT DE DÉVIATION

(30) Priorität: 15.02.2017 DE 202017100820 U
(43) Veröffentlichungstag der Anmeldung: 22.08.2018
(73) Patentinhaber: Özpolat, Ilgaz, 64385 Reichelsheim / Odw. (DE)
(72) Erfinder: Özpolat, Ilgaz, 64385 Reichelsheim / Odw. (DE)
(74) Vertreter: WSL Patentanwälte Partnerschaft mbB

(56) Entgegenhaltungen:
- EP-A1- 2 476 960
- DE-U1- 8 700 090
- DE-U1- 9 001 554
- DE-U1-202005 017 821
- US-A- 3 920 271

## Beschreibung

Die vorliegende Erfindung betrifft ein Umlenkstück zum Führen von Abluft oder Zuluft mit einem im Wesentlichen kreisförmigen, an einem ersten Ende des Umlenkstücks angeordneten ersten Anschlussquerschnitt mit einer ersten Strömungsrichtung und einem im Wesentlichen rechteckigen, an einem zweiten Ende des Umlenkstücks angeordneten zweiten Anschlussquerschnitt mit einer zweiten Strömungsrichtung, wobei die erste Strömungsrichtung und die zweite Strömungsrichtung in etwa einen rechten Winkel einschließen.

Derartige Umlenkstücke sind im Stand der Technik in mannigfaltiger Weise bekannt. Sie dienen dazu, Abluft oder Zuluft aus einem Raum oder Gebäude abzuführen oder diesem zuzuführen. Dabei erfüllen solche Umlenkstücke zweierlei Funktionen. Sie bewirken eine Umlenkung des Gasstroms aus einer ersten Strömungsrichtung in eine zweite Strömungsrichtung, wobei sich innerhalb des Umlenkstücks auch der Querschnitt der Rohrleitung von kreisförmig auf rechteckig oder umgekehrt ändert.

Derartige Umlenkstücke sind beispielsweise in der Ablufttechnik zum Betreiben von Dunstabzugshauben über einer Kochstelle, insbesondere einem Herd, erforderlich. Die Luft, welche zunächst vertikal von der Abzugshaube nach oben geführt wird, wird in eine Richtung parallel zur Decke des Gebäudes umgelenkt und gleichzeitig der Querschnitt des Rohrs von einer kreisförmigen Fläche auf eine rechteckige Fläche geändert, um eine Verlegung unter einer abgehängten Decke zu ermöglichen.

Strömungstechnisch sind sowohl die Umlenkung der Strömungsrichtung um etwa 90° als auch der Übergang von einem kreisförmigen auf einen rechteckigen Querschnitt in der Regel mit nicht zu vernachlässigenden Druckverlusten und damit einer Reduzierung des Volumenstroms verbunden. Dabei beruhen die aus dem Stand der Technik bekannten Umlenkstücke auf einer Änderung des Querschnitts von kreisförmig zu rechteckig gleichzeitig mit der Umlenkung.

Die europäische Patentanmeldung EP 2 476 960 A1 betrifft eine Umschaltvorrichtung für eine Dunstabzugshaube zum Umschalten zwischen Umluft-und Abluftbetrieb, mit einem Gehäuse, das eine Öffnung für Wrasen von der Dunstabzugshaube, eine Auslassöffnung für Umluft, eine Auslassöffnung für Abluft und ein Leitgitter innerhalb des Gehäuses aufweist. Das Leitgitter ist zwischen einer ersten Position, in der das Leitgitter die Auslassöffnung für Abluft verschließt, und einer zweiten Position, in der das Leitgitter die Auslassöffnung für Umluft verschließt, bewegbar.

Die deutsche Gebrauchsmusterschrift DE 90 01 554 U1 betrifft einen Breitkanalbogen für die Be- und Entlüftung von Küchen. Der Breitkanalbogen hat zwei in etwa rechteckige Anschlussöffnungen, die über einen bogenförmigen Flachkanal miteinander verbunden sind. Der bogenförmige Flachkanal weist ein Leitelement auf.

Die deutsche Gebrauchsmusterschrift DE 20 2005 017 821 U1 offenbart ein Umlenkstück zum Führen von Abluft oder Zuluft mit einem im Wesentlichen kreisförmigen, an einem ersten Ende des Umlenkstücks angeordneten ersten Anschlussquerschnitt mit einer ersten Strömungsrichtung und einem im Wesentlichen rechteckingen, an einem zweiten Ende des Umlenkstücks angeordneten zweiten Anschlussquerschnitt mit einer zweiten Strömungsrichtung. Die DE 20 2005 017 821 U1 offenbart dabei ein Umlenkstück mit den Merkmalen des Oberbegriffs von Anspruch 1.

Demgegenüber ist es Aufgabe der vorliegenden Erfindung, ein Umlenkstück zum Führen von Abluft oder Zuluft bereitzustellen, welches einen verringerten Druckverlust in dem von dem Umlenkstück transportierten Gasstrom bewirkt.

Zumindest eine der zuvor genannten Aufgaben wird durch ein Umlenkstück zum Führen von Abluft oder Zuluft mit den Merkmalen von Anspruch 1 gelöst. Dabei ist vorgesehen, dass das Umlenkstück einen sich an einen ersten Anschlussquerschnitt anschließenden Übergangsrohrabschnitt aufweist, der den kreisförmigen ersten Anschlussquerschnitt in einen rechteckigen Querschnitt überführt, wobei der rechteckige Querschnitt des Übergangsrohrabschnitts gleich dem zweiten Anschlussquerschnitt ist und wobei sich der Übergangsrohrabschnitt in der ersten Strömungsrichtung erstreckt, und einen Rohrbogenabschnitt mit einem konstanten rechteckigen Querschnitt aufweist, wobei der Rohrbogenabschnitt derart ausgebildet ist, dass er einen Gaststrom aus der ersten Strömungsrichtung in die zweite Strömungsrichtung umlenkt, wobei der Rohrbogenabschnitt zwei einander gegenüberliegende teilkreisbogenförmige gekrümmte Innenflächen und ein sich zwischen den gekrümmten Innenflächen erstreckendes teilkreisbogenförmiges Leitelement aufweist und wobei die gekrümmten Innenflächen und die Oberflächen des Leitelements konzentrisch angeordnet sind, wobei sich die gekrümmten Innenflächen des Rohrbogenabschnitts derart unmittelbar ausgehend von dem rechteckigen Querschnitt des Übergangsrohrabschnitts aus erstrecken, dass der Rohrbogenabschnitt an seinem dem Übergangsrohrabschnitt zugewandten Ende keinen geraden Abschnitt aufweist.

Es hat sich gezeigt, dass ein derart ausgestaltetes Umlenkstück, bei welchem die Änderung der Strömungsrichtung in einem ersten Abschnitt erfolgt und der Übergang von dem rechteckigen auf den kreisförmigen Querschnitt in einem zweiten Abschnitt erfolgt, wobei gleichzeitig in dem die Strömungsrichtung ändernden Abschnitt ein Strömungsleitelement vorgesehen ist, deutlich geringere Druckverluste bewirkt als dies bei Umlenkstücken der Fall ist, bei welchen die Richtungsänderung und die Querschnittsänderung im gleichen Abschnitt, d.h. gleichzeitig erfolgen. Zudem weist dieses Umlenkstück den Vorteil auf, dass es sowohl bei Beaufschlagung mit einem Gasstrom von dem ersten Ende zu dem zweiten Ende als auch bei einer Beaufschlagung mit einem Gasstrom von dem zweiten Ende zu dem ersten Ende jeweils gegenüber dem Stand der Technik reduzierte Druckverluste erzielt. Damit kann das erfindungsgemäße Umlenkstück in ganz unterschiedlichen Situationen in einer Lüftungsanlage verbaut werden.

Insbesondere sind in einer Ausführungsform der Erfindung ein Druckverlust bei einer Beaufschlagung mit einem Gasstrom von dem ersten Ende zu dem zweiten Ende und ein Druckverlust bei einer Beaufschlagung mit einem Gasstrom von dem zweiten Ende zu dem ersten Ende gleich groß.

Im Sinne der vorliegenden Anmeldung wird der die Strömungsrichtung ändernde Abschnitt des Umlenkstücks als Rohrbogenabschnitt bezeichnet und der den Übergang von dem kreisförmigen auf den rechteckigen Querschnitt bewirkende Abschnitt des Umlenkstücks wird als Übergangsrohrabschnitt bezeichnet.

Wenn im Sinne der vorliegenden Anmeldung von einem Querschnitt oder Anschlussquerschnitt die Rede ist, so bezeichnet ein solcher Querschnitt die Querschnittsfläche in einer Schnittebene senkrecht zur Hauptströmungsrichtung des Gases.

Wenn im Sinne der vorliegenden Anmeldung von einer Strömungsrichtung gesprochen wird, so bezeichnet diese die makroskopische Strömungsrichtung, d.h. die Hauptströmungsrichtung des Gases in dem jeweiligen Rohrabschnitt. Es wird beispielsweise davon ausgegangen, dass in einem sich verjüngenden aber geraden Rohrabschnitt die Strömungsrichtung entlang einer Geraden verläuft.

Ein im Wesentlichen kreisförmiger Querschnitt im Sinne der vorliegenden Erfindung umfasst neben der exakten Kreisform Abweichungen im Rahmen der üblichen Fertigungstoleranzen.

Ein im Wesentlichen rechteckiger Querschnitt umfasst im Sinne der vorliegenden Anmeldung neben dem Rechteck auch rechteckige Grundformen, bspw. mit abgerundeten Ecken.

Ein in etwa rechter Winkel im Sinne der vorliegenden Anmeldung umfasst neben einem Winkel von 90° auch Winkel innerhalb eines Toleranzbereichs von 85° bis 95°.

Es versteht sich, dass in einer Ausführungsform der Übergangsabschnitt gerade ist, sodass er über seine gesamte Erstreckung in Längsrichtung hinweg unabhängig von seiner Querschnittsänderung, die erste Strömungsrichtung aufweist.

Es versteht sich, dass in einer Ausführungsform der erste Anschlussquerschnitt und der zweite Anschlussquerschnitt im Wesentlichen gleiche Flächen aufweisen. Auf diese Weise werden Druckverluste durch Änderung der Querschnittsfläche vermieden.

Es versteht sich, dass im Sinne der vorliegenden Anmeldung diejenigen Querschnitte als Anschlussquerschnitte bezeichnet werden, die den Querschnitt des Umlenkstücks bei Eintritt bzw. Austritt eines Gasstroms in dieses Bauteil kennzeichnen.

In einer Ausführungsform der Erfindung ist an dem ersten Ende und an dem zweiten Ende des Umlenkstücks jeweils eine Anschlussmuffe vorgesehen, mit der das Umlenkstück mit einem weiteren Rohrabschnitt verbindbar ist. Es versteht sich, dass in einer solchen Ausführungsform der Anschlussquerschnitt derjenige Innenquerschnitt des Umlenkstücks ist, welcher mit dem zu führenden Gas in Kontakt kommt. Die Form der Anschlussmuffen ist hierfür unerheblich.

In einer Ausführungsform der Erfindung sollte der Übergangsrohrabschnitt, in welchem die Querschnittsänderung von rund auf rechteckig (oder umgekehrt) erfolgt, möglichst lang sein. Daher hat in einer Ausführungsform der Erfindung der Übergangsrohrabschnitt eine Länge von mindestens 10 cm, vorzugsweise von mindestens 12 cm und besonders bevorzugt von mindestens 15 cm. Auf der anderen Seite ist in einer Ausführungsform darauf zu achten, dass der Übergangsrohrabschnitt nicht zu lang ist, um eine Kompaktheit des Bauteils, d.h. des Umlenkstücks, zu gewährleisten und damit seinen Einbau unabhängig vom Abstand zwischen der Abzugshaube und der Geschossdecke.

Für das erfindungsgemäße Umlenkstück ist es wesentlich, dass der Rohrbogenabschnitt weder seine Querschnittsform noch seine Querschnittsfläche ändert. Mit anderen Worten ausgedrückt, weist der Rohrbogenabschnitt einen konstanten rechteckigen Querschnitt auf. Dazu sind die einander gegenüberliegenden gekrümmten Innenflächen des Rohrbogenabschnitts konzentrisch zueinander angeordnet. Wie bereits ausgeführt, ist es von elementarer Bedeutung für das erfindungsgemäße Umlenkstück, dass zusätzlich in dem Rohrbogenabschnitt ein Leitelement vorgesehen ist, wobei dieses anders als dies der Stand der Technik hergibt, Oberflächen aufweist, die ebenfalls konzentrisch zu den gekrümmten Innenflächen des Rohrbogenabschnitts sind.

In einer Ausführungsform der Erfindung erstrecken sich sowohl die einander gegenüberliegenden kreisbogenförmigen gekrümmten Innenflächen des Rohrbogenabschnitts als auch die Oberflächen des Leitelements über ein Kreisbogensegment von 90°.

Wenn auch in einer Ausführungsform mehrere Leitelemente vorgesehen sein können, so ist es zweckmäßig, wenn in einer Ausführungsform genau ein Leitelement vorgesehen ist. Es hat sich überraschenderweise gezeigt, dass mit einem einzigen Leitelement die bezweckte Wirkung erzielt werden kann, während gleichzeitig der Materialaufwand gering bleibt.

In einer Ausführungsform der Erfindung erstreckt sich das Leitelement in einer Richtung senkrecht zur Krümmungsrichtung der gekrümmten Innenflächen von einer ebenen Innenfläche des Rohrbogenabschnitts zu einer gegenüberliegenden ebenen Innenfläche des Rohrbogenabschnitts, d.h. in einer Richtung füllt das Leitelement den Rohrbogenabschnitt vollständig aus. Auf diese Weise werden zwei voneinander getrennte Abschnitte oder Kammern im Volumen des Rohrbogenabschnitts gebildet.

In einer Ausführungsform der Erfindung ist vorgesehen, dass der Ubergangsrohrabschnitt und der Rohrbogenabschnitt in dem Sinne einstückig ausgebildet sind, dass es keinen Verbindungsabschnitt, bspw. in Form einer Muffe, zwischen dem Rohrbogenabschnitt und dem Übergangsrohrabschnitt gibt.

Gemäß der Erfindung erstrecken sich die gekrümmten Innenflächen des Rohrbogenabschnitts derart unmittelbar ausgehend von dem rechteckigen Querschnitt des Übergangsrohrabschnitts aus, dass der Rohrbogenabschnitt an seinem dem Übergangsrohrabschnitt zugewandten Ende keinen geraden Abschnitt aufweist. Mit anderen Worten ausgedrückt, beginnt unmittelbar an dem rechteckigen Querschnitt des Übergangsrohrabschnitts der Rohrbogenabschnitt mit seinen gekrümmten Innenwänden. In einer weiteren Ausführungsform endet der Übergangsrohrabschnitt mit Erreichen der Rechteckform seines Querschnitts, sodass der Übergangsrohrabschnitt keinen geraden, d.h. in der ersten Strömungsrichtung verlaufenden Abschnitt mit rechteckigem Querschnitt aufweist.

In einer Ausführungsform weist der rechteckige, zweite Anschlussquerschnitt eine Längsseite und eine Schmalseite auf, wobei sich die Längsseite senkrecht zur ersten Strömungsrichtung erstreckt.

In einer weiteren Ausführungsform der Erfindung weist der zweite Anschlussquerschnitt eine Längsseite und eine Schmalseite auf, wobei das Umlenkstück aus zwei Halbschalen besteht, die an den Längsseiten des zweiten Anschlussquerschnitts zusammengefügt sind.

Weitere Vorteile, Merkmale und Anwendungsmöglichkeiten der vorliegenden Erfindung werden anhand der folgenden Beschreibung einer Ausführungsform und der dazugehörigen Figuren deutlich.
Figur 1 ist eine isometrische Ansicht einer Ausführungsform des erfindungsgemäßen Umlenkstücks.
Figur 2 ist eine Schnittansicht durch das Umlenkstück aus Figur 1.
Figur 3 ist eine Draufsicht auf den kreisförmigen Anschlussquerschnitt einer der Halbschalen, welche das Umlenkstück aus Figuren 1 und 2 bilden.
Figur 4 ist eine Draufsicht auf den rechteckigen Anschlussquerschnitt der Halbschale aus Figur 3.

Identische Elemente sind in den Figuren mit identischen Bezugszeichen bezeichnet.

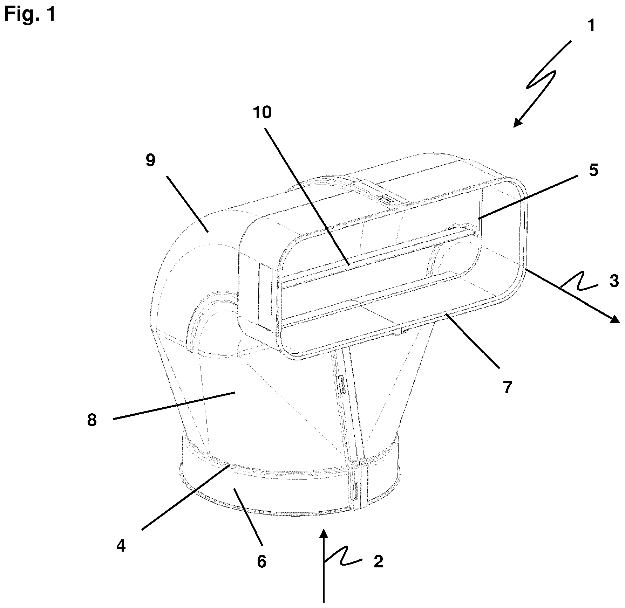

Das hier beschriebene Umlenkstück 1, so wie es in den Figuren 1 bis 4 in unterschiedlichen Ansichten dargestellt ist, dient dazu, einen Gasstrom aus einer ersten Strömungsrichtung 2 in eine zweite Strömungsrichtung 3 umzulenken und gleichzeitig den Querschnitt des Rohrabschnitts von kreisförmig auf rechteckig zu ändern. Dabei ist es der Vorteil des gezeigten Umlenkstücks 1, dass die guten, gegenüber dem Stand der Technik verbesserten Strömungseigenschaften sowohl bei einer Durchströmung von dem rechteckigen Anschlussquerschnitt zu dem kreisrunden Anschlussquerschnitt als auch von dem kreisrunden Anschlussquerschnitt zu dem rechteckigen Anschlussquerschnitt zum Tragen kommen.

Zur Vereinfachung der Darstellung wird nachfolgend davon ausgegangen, dass das Umlenkstück 1 dazu verwendet wird, den von einer Abzugshaube (in den Figuren nicht gezeigt) kommenden Abluftstrom mit einem kreisförmigen Anschlussrohr um 90° umzulenken, sodass der zunächst vertikale Luftstrom in einen horizontalen Luftstrom umgelenkt wird, und gleichzeitig den Rohrquerschnitt von kreisförmig auf rechteckig zu ändern.

Zu diesem Zweck hat das Umlenkstück 1 einen ersten kreisförmigen Anschlussquerschnitt 4 und einen zweiten im Wesentlichen rechteckigen Anschlussquerschnitt 5. An beiden Enden des Umlenkstücks 1 sind Anschlussmuffen 6, 7 vorgesehen. Es versteht sich, dass die Anschlussmuffe 6 kreisförmig ist und die Anschlussmuffe 7 im Wesentlichen rechteckig.

Das Umlenkstück 1 besteht aus einem Übergangsrohrabschnitt 8, welcher ein gerader Rohrabschnitt ist, der den zunächst kreisförmigen Querschnitt des Übergangsrohrabschnitts 8 auf rechteckig ändert, und einem Rohrbogenabschnitt 9, welcher einen konstanten rechteckigen Querschnitt aufweist und den Luftstrom aus der ersten Strömungsrichtung 2 in die zweite Strömungsrichtung 3 umlenkt.

Zusätzlich weist der Rohrbogenabschnitt 9 ein Leitelement 10 auf, das sich im freien Querschnitt des Rohrbogenabschnitts 9 erstreckt. Zusammen ergibt sich ein Umlenkstück, welches gegenüber den Umlenkstücken aus dem Stand der Technik einen reduzierten Druckverlust und damit verbesserte Strömungseigenschaften für die Abluft aufweist.

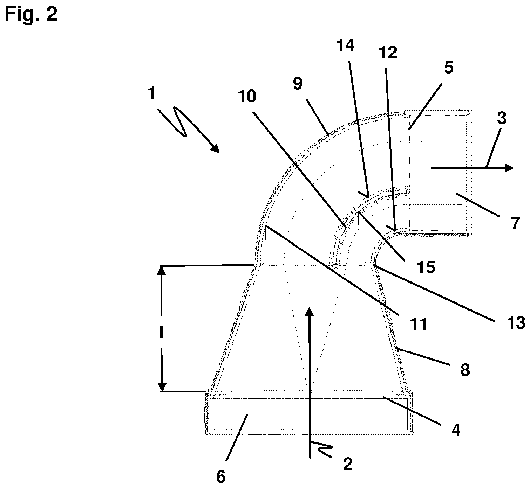

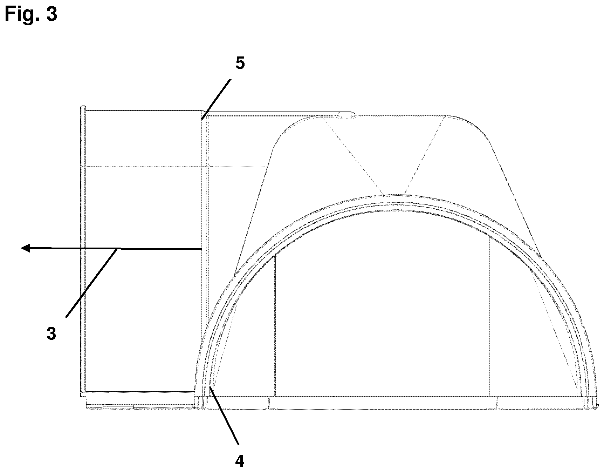

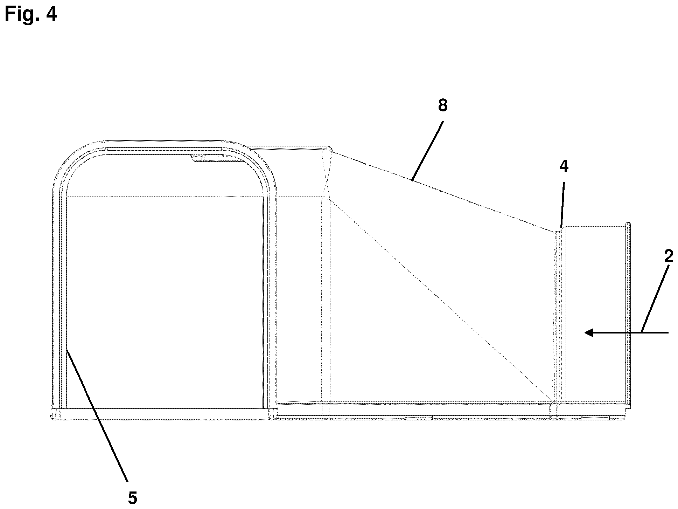

Die genaue Form des Umlenkstücks ist insbesondere der Schnittansicht aus Figur 2 und den Draufsichten auf die Anschlussquerschnitte jeweils einer Halbschale des Umlenkstücks 1 aus den Figuren 3 und 4 zu entnehmen.

Entscheidend für das Umlenkstück 1 ist es, dass die Änderung des Querschnitts des Umlenkstücks 1 vollständig innerhalb des Übergangsrohrabschnitts 8 erfolgt. Während der Anschlussquerschnitt 4 des Übergangsrohrabschnitts 8 kreisförmig ist, ist der Querschnitt des Übergangsrohrabschnitts 8 an der in Figur 2 mit den Bezugszeichen 13 bezeichneten Stelle, d.h. dem Anschlussquerschnitt 4 gegenüberliegenden Ende des Übergangsrohrabschnitts 8, rechteckig. Dieser rechteckige Querschnitt an der mit 13 bezeichneten Stelle ist identisch mit dem rechteckigen Anschlussquerschnitt 5 des Rohrbogenabschnitts 9. Der Rohrbogenabschnitt 9 zwischen der mit 13 bezeichneten Stelle und dem Anschlussquerschnitt 5 ist rechteckig, wobei sich der Querschnitt parallel zum Radius der gekrümmten Innenwandflächen 11, 12 über den Verlauf des Rohrbogenabschnitts 9 hinweg nicht ändert.

Die Innenflächen 11, 12 des Rohrbogenabschnitts 9 sind teilkreisbogenförmig gekrümmt, erstrecken sich über 90° und sind konzentrisch zueinander. Die beiden Oberflächen 14, 15 des Leitelements 10 sind ebenso konzentrisch zu den Innenflächen 11, 12 des Rohrbogenabschnitts 9.

In der dargestellten Ausführungsform hat der Übergangsrohrabschnitt 8 eine Länge l gemessen in der ersten Strömungsrichtung 2 von 12,5 cm. Diese Länge ist lang genug, um im strömungstechnischen Sinne eine adiabatische Querschnittsänderung von kreisförmig auf rechteckig zu ermöglichen und gleichzeitig die Bauform des Übergangsstücks 1 so kompakt wie möglich zu gestalten.

Entscheidend für die Funktion des Übergangsstücks 1 aus den Figuren 1 bis 4 ist, dass sich der Rohrbogenabschnitt 9 unmittelbar an den Übergangsrohrabschnitt 8 anschließt. Mit anderen Worten ausgedrückt, markiert die mit 13 in Figur 2 bezeichnete Position sowohl das Ende des Übergangsrohrabschnitts 8 als auch den Beginn des Rohrbogens 9. Anders ausgedrückt weist der Übergangsrohrabschnitt 8 keinen geraden, sich in der ersten Strömungsrichtung 2 erstreckenden Abschnitt mit rechteckigem Querschnitt auf. Auch dem Rohrbogenabschnitt 9 fehlt es zumindest an seinem dem Anschlussquerschnitt 5 entgegengesetzten Ende an einem geraden Abschnitt. Die Krümmung des Rohrbogenabschnitts 9 setzt unmittelbar am Ende des Übergangsrohrabschnitts 8 ein.

Für die Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen, solange die daraus resultierende Kombination vom Gegenstand des Anspruchs 1 gedeckt ist. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Umlenkstück
- 2: erste Strömungsrichtung
- 3: zweite Strömungsrichtung
- 4: kreisförmiger erster Anschlussquerschnitt
- 5: im Wesentlichen rechteckiger zweiter Anschlussquerschnitt
- 6, 7: Anschlussmuffe
- 8: Übergangsrohrabschnitt
- 9: Rohrbogenabschnitt
- 10: Leitelement
- 11, 12: Gekrümmte Innenwandflächen des Rohrbogenabschnitts
- 13: rechteckiger Querschnitt des Übergangsrohrabschnitts
- 14, 15: Oberflächen des Leitelements

## Patentansprüche

1. Umlenkstück (1) zum Führen von Abluft oder Zuluft mit
einem im Wesentlichen kreisförmigen, an einem ersten Ende des Umlenkstücks (1) angeordneten ersten Anschlussquerschnitt (4) mit einer ersten Strömungsrichtung (2) und
einem im Wesentlichen rechteckigen, an einem zweiten Ende des Umlenkstücks (1) angeordneten zweiten Anschlussquerschnitt (5) mit einer zweiten Strömungsrichtung (3),
wobei die erste Strömungsrichtung (2) und die zweite Strömungsrichtung (3) in etwa einen rechten Winkel einschließen,
wobei das Umlenkstück (1) zudem aufweist einen sich an den ersten Anschlussquerschnitt (4) anschließenden Übergangsrohrabschnitt (8), der den kreisförmigen ersten Anschlussquerschnitt (4) in einen rechteckigen Querschnitt (5) überführt, **dadurch gekennzeichnet, dass** der rechteckige Querschnitt (5) des Übergangsrohrabschnitts (8) gleich dem zweiten Anschlussquerschnitt (5) ist, dass sich der Übergangsrohrabschnitt (8) in der ersten Strömungsrichtung (2) erstreckt, und dass das Umlenkstück (1) weiter aufweist
einen Rohrbogenabschnitt (9) mit einem konstanten rechteckigen Querschnitt,
wobei der Rohrbogenabschnitt (9) derart ausgebildet ist, dass er einen Gasstrom aus der ersten Strömungsrichtung (2) in die zweite Strömungsrichtung (3) umlenkt,
wobei der Rohrbogenabschnitt (9) zwei einander gegenüberliegende teilkreisbogenförmig gekrümmte Innenflächen (11, 12) und ein sich zwischen den gekrümmten Innenflächen (11, 12) erstreckendes teilkreisbogenförmiges Leitelement (10) aufweist,
wobei die gekrümmten Innenflächen (11, 12) und die Oberflächen (14, 15) des Leitelements (10) konzentrisch angeordnet sind,
wobei sich die gekrümmten Innenflächen (11, 12) des Rohrbogenabschnitts (9) derart unmittelbar ausgehend von dem rechteckigen Querschnitt des Übergangsrohrabschnitts (8) aus erstrecken, dass der Rohrbogenabschnitt (9) an seinem dem Übergangsrohrabschnitt (8) zugewandten Ende keinen geraden Abschnitt aufweist.

2. Umlenkstück (1) nach Anspruch 1, **dadurch gekennzeichnet, dass** der Übergangsrohrabschnitt (8) mit Erreichen des rechteckigen Querschnitts endet, so dass der Übergangsrohrabschnitt (8) keinen geraden Abschnitt mit rechteckigem Querschnitt aufweist.

3. Umlenkstück (1) nach einem der vorhergehenden Ansprüche, **dadurch gekennzeichnet, dass** der Übergangsrohrabschnitt (8) eine Länge in der der ersten Strömungsrichtung (2) von mindestens 10 cm vorzugsweise von mindestens 12 cm und besonders bevorzugt von mindestens 15 cm aufweist.

4. Umlenkstück (1) nach einem der vorhergehenden Ansprüche, **dadurch gekennzeichnet, dass** genau ein Leitelement (10) vorgesehen ist.

5. Umlenkstück (1) nach einem der vorhergehenden Ansprüche, **dadurch gekennzeichnet, dass** sich das Leitelement (10) in einer Richtung senkrecht zur Krümmungsrichtung von einer ebenen Innenfläche des Rohrbogenabschnitts (9) zu einer gegenüberliegenden Innenfläche des Rohrbogenabschnitts (9) erstreckt.

6. Umlenkstück (1) nach einem der vorhergehenden Ansprüche, dass an dem ersten Ende und an dem zweiten Ende des Umlenkstücks (1) jeweils eine Anschlussmuffe (6, 7) vorgesehen ist, mit der das Umlenkstück (1) mit einem weiteren Rohrabschnitt verbindbar ist.

7. Umlenkstück (1) nach einem der vorhergehenden Ansprüche, **dadurch gekennzeichnet, dass** der zweite Anschlussquerschnitt (5) eine Längsseite und eine Schmalseite aufweist, wobei sich die Längsseite senkrecht zur ersten Strömungsrichtung (2) erstreckt.

8. Umlenkstück (1) nach einem der vorhergehenden Ansprüche, **dadurch gekennzeichnet, dass** der zweite Anschlussquerschnitt (5) eine Längsseite und eine Schmalseite aufweist, wobei das Umlenkstück (1) aus zwei Halbschalen besteht, die an den Längsseiten des zweiten Anschlussquerschnitts (5) zusammengefügt sind.

## Claims

1. A deflection portion (1) for guiding exhaust air or supply air comprising
a substantially circular first connection cross-section (4) arranged at a first end of the deflection portion (1) and having a first flow direction (2) and
a substantially rectangular second connection cross-section (5) arranged at a second end of the deflection portion (1) and having a second flow direction (3),
wherein the first flow direction (2) and the second flow direction (3) include approximately a right angle,
wherein the deflection portion (1) also has a transitional tube portion (8) which adjoins the first connection cross-section (4) and converts the circular first connection cross-section (4) into a rectangular cross-section (5),
**characterised in that** the rectangular cross-section (5) of the transitional tube portion (8) is equal to the second connection cross-section (5) and the transitional tube portion (8) extends in the first flow direction (2), and the deflection portion (1) further has
a tube bend portion (9) with a constant rectangular cross-section, wherein the tube bend portion (9) is so designed that it deflects a gas flow from the first flow direction (2) into the second flow direction (3),
wherein the tube bend portion (9) has two mutually opposite inner surfaces (11, 12) curved in the form of part-circular arcs and a guide element (10) extending between the curved inner surfaces (11, 12) in the form of a part-circular arc,
wherein the curved inner surfaces (11, 12) and the surfaces (14, 15) of the guide element (10) are arranged concentrically,
wherein the curved inner surfaces (11, 12) of the tube bend portion (9) extend directly from the rectangular cross-section of the transitional tube portion (8) such that the tube bend portion (9) does not have a straight portion at its end towards the transitional tube portion (8).

2. A deflection portion (1) according to claim 1 **characterised in that** the transition tube portion (8) ends when the rectangular cross section is reached, so that the transitional tube portion (8) does not have a straight portion of rectangular cross section.

3. A deflection portion (1) according to one of the preceding claims **characterised in that** the transitional tube portion (8) is of a length in the first flow direction (2) of at least 10 cm, preferably at least 12 cm and particularly preferably at least 15 cm.

4. A deflection portion (1) according to one of the preceding claims **characterised in that** exactly one guide element (10) is provided.

5. A deflection portion (1) according to one of the preceding claims, **characterised in that** the guide element (10) extends in a direction perpendicular to the direction of curvature from a flat inner surface of the tube bend portion (9) to an opposite inner surface of the tube bend portion (9).

6. A deflection portion (1) according to one of the preceding claims **characterised in that** a respective connecting sleeve (6, 7) is provided at the first end and at the second end of the deflection portion (1), with which the deflector (1) can be connected to a further pipe portion.

7. A deflection portion (1) according to one of the preceding claims **characterised in that** the second connection cross-section (5) has a longitudinal side and a narrow side, wherein the longitudinal side extends perpendicularly to the first flow direction (2).

8. A deflection portion (1) according to one of the preceding claims **characterised in that** the second connection cross-section (5) has a longitudinal side and a narrow side, wherein the deflection portion (1) comprises two half-shells which are joined together at the longitudinal sides of the second connection cross-section (5).

## Revendications

1. Elément de déviation (1) pour guider de l'air évacué ou de l'air entrant, comprenant
une première section de raccordement (4) sensiblement circulaire, disposée à une première extrémité de l'élément de déviation (1) et ayant un premier sens de flux (2) et
une deuxième section de raccordement (5) sensiblement rectangulaire, disposée à une deuxième extrémité de l'élément de déviation (1) et ayant un deuxième sens de flux (3),
le premier sens de flux (2) et le deuxième sens de flux (3) enfermant à peu près un angle droit,
l'élément de déviation (1) comprenant en outre un segment de tuyaux de transition (8) situé à la suite de la première section de raccordement (4), qui fait la transition de la première section de raccordement (4) circulaire en une section (5) rectangulaire,
**caractérisé en ce que** la section (5) rectangulaire du segment de tuyaux de transition (8) est égale à la deuxième section de raccordement (5), que le segment de tuyau de transition (8) s'étend dans le premier sens de flux (2) et que l'élément de déviation (1) comprend en outre un segment de tuyau (9) coudé ayant une section rectangulaire constante,
le segment de tuyau (9) coudé étant formé de façon telle qu'il fasse dévier un flux de gaz du premier sens de flux (2) au deuxième sens de flux (3),
le segment de tuyau (9) coudé comportant deux surfaces intérieures (11, 12) courbées en forme de portion d'arc de cercle disposées l'une en face de l'autre et un élément de guidage en forme de portion d'arc de cercle s'étendant entre les surfaces intérieures (11, 12) courbées,
les surfaces intérieures (11, 12) courbées et les surfaces (14,15) de l'élément de guidage (10) étant disposées de manière concentrique,
les surfaces intérieures (11, 12) courbées du segment de tuyau (9) coudé s'étendant directement à partir de la section rectangulaire du segment de tuyau de transition (8) d'une manière telle que le segment de tuyau (9) coudé ne présente pas de segment droit à son extrémité orientée vers le segment de tuyau de transition (8).

2. Elément de déviation (1) selon la revendication 1, **caractérisé en ce que** le segment de tuyau de transition (8) se termine en atteignant la section rectangulaire, si bien que le segment de tuyau de transition (8) ne comporte pas de segment droit ayant une section rectangulaire.

3. Elément de déviation (1) selon l'une des revendications précédentes, **caractérisé en ce que** le segment de tuyau de transition (8) comprend une longueur d'au moins 10 cm, de préférence d'au moins 12 cm et de manière particulièrement préférentielle d'au moins 15 cm dans le premier sens de flux (2).

4. Elément de déviation (1) selon l'une des revendications précédentes, **caractérisé en ce que** précisément un élément de guidage (10) est prévu.

5. Elément de déviation (1) selon l'une des revendications précédentes, **caractérisé en ce que** l'élément de guidage (10) s'étend dans une direction perpendiculaire au sens de la courbure à partir d'une surface intérieure plane du segment de tuyau (9) coudé vers une surface intérieure en regard du segment de tuyau (9) coudé.

6. Elément de déviation (1) selon l'une des revendications précédentes, **caractérisé en ce que**, respectivement à la première et à la deuxième extrémité de l'élément de déviation (1), un manchon de raccordement (6, 7) est prévu à l'aide duquel l'élément de déviation (1) peut être relié à un autre segment de tuyau.

7. Elément de déviation (1) selon l'une des revendications précédentes, **caractérisé en ce que** la deuxième section de raccordement (5) comprend un grand côté et un petit côté, le grand côté s'étendant perpendiculairement au premier sens de flux (2).

8. Elément de déviation (1) selon l'une des revendications précédentes, **caractérisé en ce que** la deuxième section de raccordement (5) comprend un grand côté et un petit côté, l'élément de déviation (1) consistant en deux demi coques qui sont assemblées aux grands côtés de la deuxième section de raccordement (5).
